# EUROPÄISCHE PATENTANMELDUNG

(11) **EP 1 757 881 A2**
(43) Veröffentlichungstag der Anmeldung: **28.02.2007**
(21) Anmeldenummer: 06017453.9
(22) Anmeldetag: 22.08.2006
(51) Int. Cl.: F25D 17/04

(54) **Kühl- und/oder Gefriergerät**

(30) Priorität: 22.08.2005 DE 202005013247 U; 22.09.2005 DE 202005014970 U
(71) Anmelder: Liebherr-Hausgeräte Lienz GmbH, 9900 Lienz (AT)
(72) Erfinder: Waldner, René, 9953 Huben (AT); Schelodetz, Roland, 9972 Virgen (AT); Mascher, Walter, 99900 Leisach (AT)
(74) Vertreter: Herrmann, Uwe

(57) **Zusammenfassung**

Die vorliegende Erfindung betrifft ein Kühl- und/oder Gefriergerät mit einem Kühlraum zur Aufnahme des Kühl- bzw. Gefriergutes sowie mit Mitteln zur Erzeugung eines Luftstromes zur wenigstens abschnittsweisen Durchströmung des Kühlraums, wobei das Gerät ein oder mehrere Mittel zur Entfernung von Ethylen aufweist, die derart angeordnet sind, dass sie von dem Luftstrom beaufschlagt werden.

## Beschreibung

Die Erfindung betrifft ein Kühl- und/oder Gefriergerät mit einem Kühlraum zur Aufnahme des Kühl- bzw. Gefriergutes sowie mit Mitteln zur Erzeugung eines Luftstromes zur wenigstens abschnittsweisen Durchströmung des Kühlraumes.

Derartige Geräte sind in zahlreichen unterschiedlichen Ausführungsformen bekannt. Es sind Geräte bekannt, die zur Erzeugung eines Umluftstromes ein Gebläse aufweisen, das Luft aus dem Kühlraum abzieht und in einen Kühlluftkanal fördert. In dem Kühlluftkanal befindet sich bei diesen Geräten ein Verdampfer, der die über diesen strömende Luft kühlt. Die auf diese Weise gekühlte Luft wird sodann wieder über an geeigneter Stelle angeordnete Öffnungen dem Kühlraum zugeführt.

Eine wichtige Forderung bei der Kühlung bzw. Lagerung von Lebensmitteln besteht darin, dass die Umgebungsbedingungen möglichst so gestaltet werden, dass die Haltbarkeit und die Qualität des eingelagerten Kühlgutes möglichst hoch ist.

Es ist bereits vorgeschlagen worden, zur Geruchsvermeidung antibakterielle Beschichtungen oder Aktivkohlefilter in Kühl- bzw. Gefriergeräten vorzusehen.

Der vorliegenden Erfindung liegt die Aufgabe zugrunde, ein Kühl- und/oder Gefriergeräte der eingangs genannten Art dahingehend weiterzubilden, dass die Haltbarkeit des eingelagerten Kühlgutes sowie dessen Qualität weiter verbessert werden kann.

Diese Aufgabe wird durch ein Kühl- und/oder Gefriergerät mit den Merkmalen des Anspruchs 1 gelöst. Danach ist vorgesehen, dass das Gerät ein oder mehrere Mittel zur Entfernung von Ethylen aufweist, die in dem Luftstrom angeordnet sind. Erfindungsgemäß ist somit vorgesehen, in dem Luftstrom ein Mittel anzuordnen, mittels dessen Ethylen aus dem Luftstrom entfernt bzw. mittels dessen der Ethylengehalt reduziert werden kann. Unter "Mittel zur Entfernung von Ethylen" ist jedes beliebige Mittel oder Medium zu verstehen, mittels dessen der Ethylengehalt der Luft verringerbar ist.

Ethylen spielt eine bedeutende Rolle im Prozess der Fruchtreifung. Es entsteht als ein Stoffwechselprodukt und führt bei zahlreichen Fruchtarten rasch zur Einleitung des unumkehrbaren Reifungsprozesses. Während der Lagerung bzw. Kühlung ist deshalb ein möglichst geringer Gehalt von Ethylen in der Atmosphäre wünschenswert. Die Qualität des eingelagerten Kühlgutes kann um so länger erhalten werden, je besser der Ethylengehalt reduziert bzw. eingedämmt wird. Eine besonders effiziente Reduzierung des Ethylengehaltes ergibt sich, wenn das Mittel zur Entfernung von Ethylen in einem das Gerät durchströmenden Luftstrom angeordnet ist.

In weiterer Ausgestaltung der Erfindung ist vorgesehen, dass der Kühlraum ein Kompartiment aufweist oder in mehrere Kompartimente unterteilt ist. Das Gerät kann somit nur einen einzigen Kühlraum aufweisen oder auch in mehrere, beispielsweise bei unterschiedlicher Temperatur betriebene Kompartimente unterteilt sein.

In einer weiteren Ausgestaltung der Erfindung ist vorgesehen, dass das Mittel zur Entfernung von Ethylen in dem Kühlraum bzw. in einem, mehreren oder allen Kompartimenten angeordnet ist. Denkbar ist somit, dass der Kühlraum in mehrere Kompartimente unterteilt ist und dass beispielsweise in jedem dieser Kompartimente oder in mehreren von diesen die erfindungsgemäßen Mittel zur Entfernung von Ethylen derart angeordnet sind, dass sie von dem Luftstrom beaufschlagt werden.

In weiterer Ausgestaltung der Erfindung ist vorgesehen, dass das Gerät einen Kühlluftkanal aufweist, aus dem Kaltluft in das Kühlfach bzw. in das oder die Kompartimente einströmt und dass das Mittel zur Entfernung von Ethylen in dem Kühlluftkanal oder im Bereich der Öffnung angeordnet ist, durch die der Kühlluftkanal in das Kühlfach bzw. ein Kompartiment mündet. Denkbar ist somit, das oder die Mittel zur Entfernung von Ethylen in einem Kühlluftkanal anzuordnen. Dabei kann die genaue Position den jeweiligen Erfordernissen angepaßt werden.

Das oder die Mittel zur Entfernung von Ethylen können unmittelbar in dem Kühlluftkanal oder auch in dem Bereich angeordnet sein, in dem der Kühlluftkanal in das Kühlfach bzw. ein oder mehrere Kompartimente mündet.

In einer weiteren Ausgestaltung der Erfindung ist vorgesehen, dass das Gerät einen Kühlluftkanal aufweist, aus dem Kaltluft in das Kühlfach bzw. in das oder die Kompartimente einströmt und dass das Mittel zur Entfernung von Ethylen stromaufwärts der in Strömungsrichtung ersten Öffnung angeordnet ist, durch die der Kühlluftkanal in ein Kompartiment mündet. Bei einer derartigen Ausgestaltung der Erfindung durchströmt bzw. umströmt dass der Luftstrom zunächst das Mittel zur Entfernung von Ethylen und erst dann wird die Luft in das Kühlfach geführt wird bzw. auf die Kompartimente verteilt.

Grundsätzlich ist selbstverständlich auch eine andere Anordnung denkbar. Eine Möglichkeit besteht z. B. darin, die Mittel zur Entfernung von Ethylen derart anzuordnen, dass nur die in ein oder mehrere bestimmte Kompartimente strömende Luft das Mittel zur Entfernung von Ethylen umströmt bzw. durchströmt, d. h. dass nicht die gesamte Umluft die Mittel zur Entfernung von Ethylen durch- bzw. umströmt.

In bevorzugter Ausgestaltung der Erfindung ist vorgesehen, dass das Gerät wenigstens ein Kaltlagerfach aufweist und dass das Mittel zur Entfernung von Ethylen in dem Kaltlagerfach oder in dem Luftstrom angeordnet ist, der dem Kaltlagerfach zugeführt wird oder aus diesem abgeführt wird. Bei einem Kaltlagerfach handelt es sich um ein Kompartiment des Gerätes, das bei einer geringeren Temperatur als ein herkömmliches Kühlfach betrieben wird. Ein Kaltlagerfach kann beispielsweise in einem Temperaturbereich um 0° C oder geringfügig oberhalb von 0° C betrieben werden, was den Vorteil mit sich bringt, dass bestimmtes Kühlgut wie beispielsweise Salat, Gemüse oder Früchte eine besonders hohe Haltbarkeit aufweisen. Denkbar ist, das Mittel zur Entfernung von Ethylen in dem Luftstrom anzuordnen, der in ein solches Kaltlagerfach einströmt. Grundsätzlich ist es beispielsweise ebenfalls selbstverständlich denkbar, das Mittel zur Entfernung von Ethylen in dem Kaltlagerfach selbst oder auch in dem Kühlluftkanal oder im Bereich der Mündung zwischen Kühlluftkanal und Kompartiment anzuordnen.

In weiterer Ausgestaltung der Erfindung ist vorgesehen, dass die Mittel zur Erzeugung des Luftstroms durch ein Gebläse gebildet werden und dass das Mittel zur Entfernung von Ethylen im Bereich des Gebläses angeordnet ist oder einen Bestandteil des Gebläses bildet. Eine derartige Ausgestaltung der Erfindung hat den Vorteil, dass der gesamte oder ein wesentlicher Teil des geförderten Luftstroms das Mittel zur Entfernung von Ethylen durchströmt oder umströmt und somit entsprechend eine Verringerung des Ethylengehalts des gesamten geförderten Luftstroms stattfindet.

Grundsätzlich kann auch vorgesehen sein, dass das Gerät einen Kühlluftkanal aufweist, aus dem Kaltluft in das oder die Kompartimente des Gerätes einströmt und dass wenigstens eine verschieblich angeordnete Platte oder verschwenkbare Klappe vorgesehen ist, mittels derer die Menge und/oder die Verteilung der den Kompartimenten zugeführten Kaltluft veränderbar ist und dass das Mittel zur Entfernung von Ethylen im Bereich der Platte/Klappe oder an der Platte/Klappe angeordnet ist.

Grundsätzlich ist es ebenfalls denkbar, das Mittel zur Entfernung von Ethylen an beliebiger geeigneter anderer Stelle wie z. B. am oder im Bereich des Verdampfers anzuordnen, der sich im Kühlluftkanal befinden kann.

Eine besonders wirksame Entfernung von Ethylen bzw. Verringerung des Ethylengehalts ergibt sich dann, wenn das Mittel zur Entfernung von Ethylen in einem luftdurchströmten Bereich derart angeordnet ist, dass es sich vollständig oder im wesentlichen über dessen Querschnittsfläche erstreckt.

Die Ausgestaltung des Mittels zur Entfernung von Ethylen ist weitgehend beliebig. Denkbar ist beispielsweise, dass das Mittel aus einem Filtereinsatz und einer Aufnahme für den Filtereinsatz besteht. Dabei ist die Aufnahme derart angeordnet, dass sie sich bzw. der darin aufgenommene Filtereinsatz in einem luftdurchströmten Bereich befindet, so dass beispielsweise die dem Kaltlagerfach zugeführte Kühlluft entsprechend von Ethylen befreit wird bzw. deren Ethylengehalt verringert wird.

Besonders bevorzugt ist es, wenn der Filtereinsatz auswechselbar ausgeführt ist.

In weiterer Ausgestaltung der Erfindung ist vorgesehen, dass das Mittel zur Entfernung von Ethylen als Oberflächenbeschichtung ausgeführt ist. Somit ist es möglich, die Bereiche des Kühlgerätes, beispielsweise Bereiche des Kühlluftkanals, den Mündungsbereich, über den Kühlluft in die Kompartimente eintritt, oder Bereiche der Kompartimente mit einer entsprechenden Beschichtung zu versehen. Ebenfalls ist denkbar, die Mittel zur Entfernung von Ethylen in Form eines Granulates oder Pulvers bereit zu stellen.

Die Art der Entfernung von Ethylen ist weitgehend beliebig. Denkbar ist, dass das Mittel zur Entfernung von Ethylen als Absorber und/oder als Adsorber und/oder als Einheit zur Konvertierung, d. h. reaktiven Umsetzung von Ethylen ausgeführt ist. Ergänzend wird darauf hingewiesen, dass unter "Mitteln zur Entfernung" von Ethylen nicht nur solche Mittel zu verstehen sind, die eine vollständige Befreiung des Luftstroms von Ethylen bewirken, sondern auch solche Mittel, die lediglich eine Verringerung des Ethylengehaltes der Luft bewirken, wodurch ebenfalls bereits eine signifikante Verbesserung der Qualität der Lagerbedingungen erhalten werden kann.

Unter dem Begriff "Kühl- und/oder Gefriergerät" sind auch solche Geräte zu verstehen, die eine Heizeinrichtung umfassen, mittels derer der Kühlraum oder ein oder mehrere Kompartimente des Kühlraums beheizt werden können. Denkbar ist beispielsweise, dass diese Heizeinrichtung den Innen- bzw. Kühlraum des Gerätes beheizt, wenn der Temperatur-Sollwert oberhalb der Außentemperatur liegt. Ist beispielsweise bei einem Weinlagerschrank die Soll-Temperatur auf 18° C eingestellt, beträgt die Außentemperatur beispielsweise jedoch nur 10° C, ist der Betrieb der Heizeinrichtung erforderlich, um die Ist-Temperatur auf dem Sollwert zu halten.

Denkbar ist, die Heizeinrichtung so auszugestalten, dass der gesamte Kühlraum beheizbar ist. Selbstverständlich ist ebenfalls denkbar, dass der Kühlraum ein oder mehrere Kompartimente aufweist und dass die Heizeinrichtung derart ausgeführt ist, dass nur ein oder mehrere Kompartimente durch die Heizeinrichtung beheizt werden können.

Weitere Einzelheiten und Vorteile der Erfindung werden anhand eines in dem folgenden dargestellten Ausführungsbeispiels näher erläutert.

Das Kühlgerät gemäß dem Ausführungsbeispiel weist ein oben angeordnetes Kühlfach und ein darunter angeordnetes Kaltlagerfach auf. Im rückwärtigen Bereich dieser beiden Fächer erstreckt sich ein Kühlluftkanal, in dessen oberen Endabschnitt ein Gebläse angeordnet ist, dass im Betrieb Luft aus dem Kühlraum in den Kühlluftkanal fördert.

In dem Kühlluftkanal befindet sich ein Verdampfer, der die an diesem vorbeiströmende Luft kühlt.

Der Kühlluftkanal steht über wenigstens eine Öffnung mit dem Kühlfach und über wenigstens eine weitere Öffnung mit dem Kaltlagerfach in Verbindung.

Die Luftverteilung bzw. die den Kompartimenten zugeführte Luftmenge wird mittels einer Platte eingestellt, die verschieblich im Bereich des Kühlluftkanals angeordnet ist und die Mündungen des Kühlluftkanals zu den Kompartimenten je nach Stellung der Platte freigibt, teilweise verschließt oder vollständig verschließt.

In dem Bereich des Kühlluftkanals, in dem Kühlluft zu dem unten angeordneten Kaltlagerfach strömt bzw. in dem Mündungsbereich des Kühlluftkanals in das Kaltlagerfach ist ein Ethylen-Absorber derart angeordnet, dass der in das Kaltlagerfach strömende Kaltluftstrom weitgehend oder vollständig durch den Absorber geführt wird. Dabei kommt es zu einer signifikanten Verringerung des Ethylengehaltes der dem Kaltlagerfach zugeführten Kaltluft und damit zu einer Verlängerung der Haltbarkeit und zu einer Verbesserung der Qualität von Obst und Gemüse, etc., die sich in dem Kaltlagerfach befinden.

Der Ethylen-Absorber besteht aus einem Filtereinsatz mit einem Granulat zur Absorption von Ethylen. Dieser Einsatz ist wechselbar im direkten Luftstrom des Kaltlagerfaches eingebaut.

Die vorliegende Erfindung ermöglicht es in hervorragender Weise bei sämtlichen Kühl- und/oder Gefriergeräten, in denen ein Luftstrom erzeugt wird, wie z. B. bei Umluftgeräten, durch Einsatz der Mittel zur Entfernung von Ethylen die Haltbarkeit des eingelagerten Kühlgutes zu verlängern und somit auch ganz wesentlich die Qualität des Kühlgutes zu verbessern.

## Patentansprüche

1. Kühl- und/oder Gefriergerät mit einem Kühlraum zur Aufnahme des Kühl- bzw. Gefriergutes sowie mit Mitteln zur Erzeugung eines Luftstromes zur wenigstens abschnittsweisen Durchströmung des Kühlraums, **dadurch gekennzeichnet, dass** das Gerät ein oder mehrere Mittel zur Entfernung von Ethylen aufweist, die derart angeordnet sind, dass sie von dem Luftstrom beaufschlagt werden.

2. Kühl- und/oder Gefriergerät nach Anspruch 1, **dadurch gekennzeichnet, dass** der Kühlraum ein Kompartiment aufweist oder in mehrere Kompartimente unterteilt ist.

3. Kühl- und/oder Gefriergerät nach Anspruch 2, **dadurch gekennzeichnet, dass** das Mittel zur Entfernung von Ethylen in dem Kühlraum bzw. in einem, mehreren oder allen Kompartimenten angeordnet sind.

4. Kühl- und/oder Gefriergerät nach einem der vorhergehenden Ansprüche, **dadurch gekennzeichnet, dass** das Gerät einen Kühlluftkanal aufweist, aus dem Kaltluft in das Kühlfach bzw. in das oder die Kompartimente einströmt und dass das Mittel zur Entfernung von Ethylen in dem Kühlluftkanal oder im Bereich der Öffnung angeordnet ist, durch die der Kühlluftkanal in das Kühlfach bzw. ein Kompartiment mündet.

5. Kühl- und/oder Gefriergerät nach einem der vorhergehenden Ansprüche, **dadurch gekennzeichnet, dass** das Gerät einen Kühlluftkanal aufweist, aus dem Kaltluft in das Kühlfach bzw. in das oder die Kompartimente einströmt und dass das Mittel zur Entfernung von Ethylen stromaufwärts der in Strömungsrichtung ersten Öffnung angeordnet ist, durch die der Kühlluftkanal in ein Kompartiment mündet.

6. Kühl- und/oder Gefriergerät nach einem der vorhergehenden Ansprüche, **dadurch gekennzeichnet, dass** das Gerät wenigstens ein Kaltlagerfach aufweist und dass das Mittel zur Entfernung von Ethylen in dem Kaltlagerfach oder in dem Luftstrom angeordnet ist, der dem Kaltlagerfach zugeführt wird oder aus diesem abgeführt wird.

7. Kühl- und/oder Gefriergerät nach einem der vorhergehenden Ansprüche, **dadurch gekennzeichnet, dass** die Mittel zur Erzeugung des Luftstroms durch ein Gebläse gebildet werden und dass das Mittel zur Entfernung von Ethylen im Bereich des Gebläses angeordnet ist oder einen Bestandteil des Gebläses bildet.

8. Kühl- und/oder Gefriergerät nach einem der vorhergehenden Ansprüche, **dadurch gekennzeichnet, dass** das Gerät einen Kühlluftkanal aufweist, aus dem Kaltluft in das oder die Kompartimente des Gerätes einströmt und dass eine oder mehrere verschieblich oder schwenkbar angeordnete Platten vorgesehen sind, mittels derer die Menge und/oder die Verteilung der den Kompartimenten zugeführten Kaltluft veränderbar ist und dass das Mittel zur Entfernung von Ethylen im Bereich der Platte oder an der Platte angeordnet ist.

9. Kühl- und/oder Gefriergerät nach einem der vorhergehenden Ansprüche, **dadurch gekennzeichnet, dass** das Mittel zur Entfernung von Ethylen in einem luftdurchströmten Bereich derart angeordnet ist, dass es sich vollständig oder im Wesentlichen über dessen Querschnittsfläche erstreckt.

10. Kühl- und/oder Gefriergerät nach einem der vorhergehenden Ansprüche, **dadurch gekennzeichnet, dass** das Mittel zur Entfernung von Ethylen aus einem Filtereinsatz und einer Aufnahme für den Filtereinsatz besteht.

11. Kühl- und/oder Gefriergerät nach Anspruch 10, **dadurch gekennzeichnet, dass** der Filtereinsatz auswechselbar ausgeführt ist.

12. Kühl- und/oder Gefriergerät nach einem der vorhergehenden Ansprüche, **dadurch gekennzeichnet, dass** das Mittel zur Entfernung von Ethylen als Oberflächen-Beschichtung ausgeführt ist.

13. Kühl- und/oder Gefriergerät nach einem der vorhergehenden Ansprüche, **dadurch gekennzeichnet, dass** das Mittel zur Entfernung von Ethylen als Absorber und/oder Adsorber und/oder als Einheit zur Konvertierung von Ethylen ausgeführt ist.

14. Kühl- und/oder Gefriergerät nach einem der vorhergehenden Ansprüche, **dadurch gekennzeichnet, dass** das Gerät wenigstens eine Heizeinrichtung umfasst, mittels derer der Kühlraum bzw. ein oder mehrere Kompartimente des Kühlraums beheizbar sind.
